# EUROPÄISCHE PATENTSCHRIFT

(11) **EP 3 789 824 B1**
(45) Veröffentlichungstag und Bekanntmachung des Hinweises auf die Patenterteilung: **02.11.2022**
(21) Anmeldenummer: 19195744.8
(22) Anmeldetag: 05.09.2019
(51) Int. Cl.: E04H 3/30, G03B 21/54, E04H 3/12, A63J 25/00, A63G 31/16, A63J 5/00

(54) **FILMVORFÜHRVORRICHTUNG**
FILM DISPLAY ARRANGEMENT
DISPOSITIF D'AFFICHAGE DU FILM

(43) Veröffentlichungstag der Anmeldung: 10.03.2021
(73) Patentinhaber: Simtec Systems GmbH, 38108 Braunschweig (DE)
(72) Erfinder: KAUFMANN, Bernd, 38124 Braunschweig (DE); KAUFMANN, Anna Lena, 38114 Braunschweig (DE)
(74) Vertreter: Gramm, Lins & Partner Patent- und Rechtsanwälte PartGmbB

(56) Entgegenhaltungen:
- EP-A1- 3 235 550
- WO-A1-95/33539
- CN-A- 101 912 689
- CN-A- 108 295 493
- DE-A1-102011 122 229

## Beschreibung

Die Erfindung betrifft ein Zuschauermodul für eine Filmvorführvorrichtung gemäß dem Oberbegriff von Anspruch 1.

Eine derartiges Zuschauermodul ist aus der DE 10 2011 122 229 A1 bekannt und dient dazu, die Zuschauer auf einfache Weise in eine Position zu bewegen, in der sie den Film besonders gut ansehen können. Dieses System hat sich in seiner Funktionalität bewährt, hat aber den Nachteil, dass es vergleichsweise aufwändig in der Herstellung, Installation und/oder Wartung sein kann.

EP 3 235 550 A1 beschreibt ein Fahrgeschäft, bei dem eine Plattform mit daran befestigten Sitzen mittels eines Hexapodantriebs bewegbar angeordnet ist. Der Hexapodantrieb ist auf einem fahrbaren Vehikel angeordnet. Nachteilig an dieser Lösung ist, dass die Plattform entweder nur um einen vergleichsweise kleinen Winkelbetrag geneigt werden kann oder aber einen aufwändigen Hexapodantrieb erfordert.

Die WO 95/33539 A1 beschreibt ein ähnliches System, bei dem ein Sitz an einem Hexapodantrieb befestigt ist, sodass der Benutzer, der auf dem Sitz sitzt, beim Videospielen ein besonders realistisches Gefühl vermittelt bekommen kann. Auch ein solches System kann nur um einen kleinen Winkelbetrag geneigt werden.

Aus der CN 101 912 689 A ist eine Filmvorführvorrichtung bekannt, bei der die Sitze für die Zuschauer an einem schwenkbaren Arm befestigt sind. Nachteilig an diesem System ist, dass der Arm große Kräfte aufnehmen muss, sodass das gesamte System aufwendig in der Herstellung ist.

Der Erfindung liegt die Aufgabe zugrunde, Nachteile im Stand der Technik zu vermindern.

Die Erfindung löst das Problem durch ein Zuschauermodul mit den Merkmalen von Anspruch 1.

Gemäß einem weiteren Aspekt löst die Erfindung das Problem durch ein Verfahren mit den Merkmalen von Anspruch 15.

Vorteilhaft an der Erfindung ist, dass jeder Zuschauer, insbesondere dann, wenn die Linearantriebe einen Hexapodantrieb bilden, was gemäß einer bevorzugten Ausführungsform der Erfindung vorgesehen ist, so bewegt werden können, dass sich eine realistische Illusion ergibt, die Handlung im gezeigten Film selbst zu erleben.

Vorteilhaft ist zudem, dass die Bewegungsvorrichtung mit im Vergleich zu bisherigen Lösungen einfacheren Mitteln aufgebaut werden kann. So bewirkt der schwenkbare Arm, dass die Bewegung der Sitze der Zuschauer in einem weiten Umfang allein durch das Bewegen des schwenkbaren Arms bewirkt werden kann, um sie aus der Andocklage, in der die Zuschauer ihren Sitz einnehmen können, in eine Vorführ-Lage, in der sie den Film betrachten können, gebracht werden. Anders als bei Lösungen aus dem Stand der Technik, bei denen der Hexapodantrieb vollständig an einer Schwinge befestigt ist, muss der Arm nicht sämtliche Kräfte und Momente aufnehmen, sondern nur diejenigen Kräfte und Momente, die von den Linearantrieben ausgeübt werden, die am schwenkbaren Arm befestigt sind. Die anderen Kräfte können über die Fußpunkte der jeweiligen Linearantriebe direkt in ein Gebäude eingeleitet werden, an dem die Bewegungsvorrichtung befestigt ist. Zudem sind die Anforderungen an dieses Gebäude geringer, da die lokal einzubringenden Kräfte in der Regel kleiner sind als bei bekannten Systemen. Günstig ist es, wenn die Linearantriebe so angeordnet sind, dass die Kräfte, die über den schwenkbaren Arm geführt werden, kleiner sind als die Kräfte, die nicht über den schwenkbaren Arm geführt werden. Vorzugsweise sind die Kräfte, die über den schwenkbaren Arm geführt werden, möglichst klein.

Gemäß einer bevorzugten Ausführungsform weist die Filmdarstellvorrichtung (a) zumindest eine Projektionsfläche und (b) zumindest einen Projektor, der zum Projizieren eines Films auf die Projektionsfläche eingerichtet ist, auf. Ein solches System ist oft leicht zu skalieren und meist vergleichsweise einfach herzustellen.

Alternativ oder zusätzlich kann die Filmdarstellvorrichtung einen LED-Bildschirm oder eine andere Art einer selbstleuchtenden Leinwand aufweisen. Dieser LED-Bildschirm kann, insbesondere sphärisch, gekrümmt sein, das ist aber nicht notwendig.

Im Rahmen der vorliegenden Beschreibung wird unter der Projektionsfläche insbesondere eine ebene oder gekrümmte Fläche verstanden, die hell, beispielsweise weiß, ist, sodass der Film auf die Projektionsfläche projiziert werden kann.

Unter dem Projektor wird insbesondere eine Vorrichtung verstanden, mittels der eine rasche Folge von zumindest 15 zueinander verschiedenen Bildern pro Sekunde (Laufbild) auf die Projektionsfläche projizierbar ist. Es ist möglich, dass der Projektor aus mehreren Einzelprojektoren aufgebaut ist, die unterschiedliche Bereiche der Projektionsfläche beleuchten. Derartige Projektoren, die aus mehreren Einzelprojektoren aufgebaut sind, werden in 3D-Kinos standardmäßig eingesetzt.

Es ist möglich und günstig, wenn die Filmvorführvorrichtung zum Aufnehmen von zumindest 4, insbesondere zumindest 12, vorzugsweise zumindest 20, Zuschauern ausgebildet ist. In anderen Worten ist es vorteilhaft, wenn zumindest 4, insbesondere zumindest 20, Sitze für Zuschauer vorhanden sind. Vorzugsweise ist die Filmvorführvorrichtung zum Aufnehmen von höchstens 120 Zuschauern ausgebildet.

Unter dem Film wird eine Folge von Bildern verstanden, die entweder fest vorgegeben sind, wie in einem klassischen Kinofilm. Alternativ ist es möglich, dass der Film interaktiv berechnet wird. So kann die Filmvorführvorrichtung ein Flugsimulator sein. Vorzugsweise besitzt die Filmvorführvorrichtung eine Rechnereinheit, die mit einer Steuervorrichtung gekoppelt ist. Wird die Steuervorrichtung betätigt, so errechnet die Rechenvorrichtung die Reaktion, die ein Flugzeug auf eine entsprechende Betätigung einer Steuervorrichtung zeigen würde und berechnet zudem Bilder, die von dem Projektor auf die Projektionsfläche projiziert werden, sowie Steuersignale für die Bewegungsvorrichtung. Die Zuschauer auf den Sitzen haben dann das Gefühl, sie würden in einem Flugzeug sitzen, das mit der Steuervorrichtung gesteuert wird. Statt der Simulation eines Flugzeugs kann auch jedes beliebige andere Flugzeug simuliert werden, beispielsweise Flugkörper wie Hubschrauber, Tragschrauber, Raketen oder Fahrzeuge, wie beispielsweise ein virtuelles Fahrzeug auf einer virtuellen Fahrbahn oder Schiffe.

In der Andock-Lage kann das Bodenelement beispielsweise direkt an einen Ausgang angedockt sein. Der Ausgang ist vorzugsweise ein unbeweglicher Teil eines Gebäudes. Auf diese Weise wird ein System erhalten, das wenig Bauraum beansprucht. Ein solches Gebäude mit einer erfindungsgemäßen Filmvorführvorrichtung ist ein weiterer Gegenstand der Erfindung.

Alternativ kann das Bodenelement in der Andock-Lage beispielsweise an eine Andockstation angedockt sein, die gemäß einer bevorzugten Ausführungsform Teil der Filmvorführvorrichtung ist. Die Andockstation kann vorzugsweise von dem Bodenelement weg bewegt werden. Vorteilhaft daran ist, dass die Bewegungsenvelope frei ist und die Bewegung schon aus der Andocklage in, vorzugsweise allen, Freiheitsgraden ausgeführt werden kann.

Vorzugsweise ist die Filmvorführvorrichtung zum rückkopplungsfreien Vorführen des Films ausgebildet. In anderen Worten werden der Film und die Bewegung der Sitze der Zuschauer anhand einer fest vorgegebenen Folge von Bildern und Bewegungen ausgeführt. In anderen Worten handelt es sich bei der Filmvorführvorrichtung vorzugsweise nicht um einen Simulator. Bei einem Simulator ist das gezeigte Bild abhängig von einer Eingabe einer Person, die mittels des Simulators in der Regel trainiert wird. Derartige Simulatoren sind sehr aufwändig in der Herstellung und damit teuer. Sie sind daher für die Unterhaltung einer Vielzahl von Menschen in der Regel nicht geeignet.

Unter dem Merkmal, dass die Sitze kollektiv in zumindest fünf Freiheitsgraden bewegbar sind, wird insbesondere verstanden, dass die Sitze bezüglich zumindest fünf Freiheitsgraden relativ zueinander gekoppelt sind. Beispielsweise sind die Sitze bezüglich der drei Translationsfreiheitsgrade miteinander gekoppelt. Das ist insbesondere dann der Fall, wenn alle Sitze an einem Bodenelement befestigt sind. Wird dieses Bodenelement in eine Raumrichtung translatorisch bewegt, so bewegen sich alle Sitze um den gleichen Betrag in die gleiche Richtung.

Günstig ist es, wenn die Sitze um zumindest eine Sitz-Schwenkachse schwenkbar gelagert sind. Der schwenkbare Arm ist um eine Arm-Schwenkachse schwenkbar gelagert. Besonders vorteilhaft ist es dann, wenn die zumindest eine Sitz-Schwenkachse zumindest im Wesentlichen parallel zur zumindest einen Arm-Schwenkachse verläuft.

Unter dem Merkmal, dass die Schwenkachsen im Wesentlichen parallel zueinander verlaufen, ist zu verstehen, dass es zwar möglich ist, dass die Schwenkachsen parallel zueinander verlaufen, dass es aber auch möglich ist, dass beide Schwenkachsen einen Winkel miteinander einschließen, der beispielsweise kleiner ist als 10°. Das hat den Vorteil, dass der Arm betätigt werden kann und die Sitze eine Gegenbewegung ausführen können, die dazu führt, dass der Sitz keine Drehbeschleunigung erfährt.

Gemäß einer bevorzugten Ausführungsform besitzt die Filmvorführvorrichtung einen Zugang, auf dem Zuschauer zu den Sitzen gehen können, wobei die Bewegungsvorrichtung ein Bodenelement aufweist, an dem die Sitze schwenkbar befestigt sind. Es ergibt sich so eine besonders einfache Konstruktion.

Vorteilhaft ist es, wenn die Bewegungsvorrichtung durch Betätigen des schwenkbaren Arms in eine Andock-Lage, in der das Bodenelement an den Zugang angedockt ist, und in eine Vorführ-Lage, in der das Bodenelement gegenüber seiner ersten Lage um einen Schwenkwinkel von zumindest 15° geneigt ist, bringbar ist. Das Bodenelement hat in der zweiten Lage in aller Regel einen größeren Abstand vom Zugang, als in der ersten Lage. Ausgehend von dieser Lage kann dann eine Vielzahl von Bewegungen mit der Bewegungsvorrichtung, die vorzugsweise einen Hexapodantrieb bildet, durchgeführt werden.

Die Andock-Lage kann auch als Ruhelage bezeichnet werden, die einen Zuschauerwechsel erlaubt. Die Vorführ-Lage kann als Arbeitslage bezeichnet werden, in der die Zuschauer den Film ansehen und bewegt werden.

Vorzugsweise sind die Sitze so am Bodenelement angeordnet, dass dann, wenn die Bewegungsvorrichtung in der Andock-Lage ist, für zumindest ein Drittel der auf den Sitzen sitzenden Personen zumindest ein Sitz in einem Blickfeld ist, aber höchstens ein Zehntel der auf den Sitzen sitzenden Personen, wenn die Bewegungsvorrichtung in der Vorführ-Lage ist. Unter dem Blickfeld wird insbesondere das binokulare menschliche Blickfeld verstanden, das horizontal ±10° Ausdehnung hat, vertikal positiv nach oben +25° und negativ nach unten -35°.

Das Blickfeld, das als Fokussierfeld bezeichnet werden könnte, bezeichnet diejenigen Bereiche, die alle mit dem Auge nacheinander zentral fixierbaren Sehobjekte im Außenraum enthalten. Wenn in der Vorführ-Lage für höchstens ein Zehntel der auf den Sitzen sitzenden Personen, insbesondere für kleine Personen, ein anderer Sitz im Blickfeld liegt, hat die Person den Eindruck, vollkommen allein im Raum zu sein, was ein besonders intensives Erleben ermöglicht.

Es ist vorteilhaft, wenn das Bodenelement allein mittels des schwenkbaren Arms um zumindest 20°, insbesondere um zumindest 30°, schwenkbar ist.

Vorzugsweise ist das Bodenelement mittels des Hexapodantriebs bezüglich einer Schwenkbewegung um die Arm-Schwenkachse um zumindest 25°, insbesondere um zumindest 30°, schwenkbar. Günstig ist zudem, wenn das Bodenelement mittels des Arms und des Hexapodantriebs gemeinsam um zumindest 60°, insbesondere um zumindest 70°, verschwenkbar ist. Als besonders günstig haben sich 90° ± 25° herausgestellt. Vorzugsweise ist das Bodenelement mittels des Arms und des Hexapodantriebs gemeinsam um höchstens 180° verschwenkbar.

Gemäß einer bevorzugten Ausführungsform besitzt der Hexapodantrieb zumindest sechs Linearantriebe, wobei jeder der Linearantriebe eine Minimallängenstellung, eine Maximallängenstellung und einen Hub hat, wobei zumindest ein Linearantrieb dann, wenn die Bewegungsvorrichtung in der ersten Lage ist, höchstens 75 % seines Hubs aus der Minimallängenstellung zurückgelegt hat. Vorzugsweise sind in der Andock-Lage zumindest fünf, insbesondere sechs, Linearantriebe zu zumindest 75% eingefahren. Der schwenkbare Arm und dessen Schwenkantrieb sind dann vorzugsweise in ihren jeweiligen Endlagen.

Unter einem Linearantrieb wird insbesondere ein Antrieb verstanden, der eine Drucckraft und eine Zugkraft aufbringen kann. Der Linearantrieb kann auch ein Teleskopantrieb sein und einstufig, zweistufig oder mehrstufig ausgebildet sein. Insbesondere umfasst der Linearantrieb einen Hydraulikzylinder oder einen Kugelgewindetrieb.

Um einen möglichst großen Winkel zwischen der Andock-Lage und der Vorführ-Lage zu erreichen, ist es vorteilhaft, wenn die Bewegungsvorrichtung dann, wenn die Bewegungsvorrichtung in der ersten Lage ist, eine extreme Stellung annimmt oder sich in einer Umgebung einer extremen Stellung befindet. Das wiederum bedeutet, dass zumindest ein Linearantrieb dicht bei seiner Maximallängenstellung ist. Die Maximallängenstellung bezeichnet die Stellung des Linearantriebs, in der er seine maximale Länge hat. Entsprechend bezeichnet die Minimallängenstellung die Stellung des Linearantriebs, in der er seine minimale Länge hat. Der Hub ist die Längendifferenz zwischen der Länge bei Maximallängenstellung und der Länge bei Minimallängenstellung.

Zudem ist es von Vorteil, wenn alle Aktuatoren in der ersten Lage keine Energie aufbringen müssen, sodass sie, wenn aus Sicherheitsgründen erforderlich, nur abgeschaltet werden müssen und es nicht notwendig ist, das Bodenelement mit Fremdenergie in eine stabile Lage zu bringen oder zu halten oder es zu bremsen.

Günstig ist es, wenn das Bodenelement in der Andock-Lage in einer stabilen Lage ist. Das heißt, dass es ohne Energiezuführung die Andock-Lage nicht verlässt. Bremsen sind dann entbehrlich.

Vorzugsweise besitzt eine Mehrzahl der Sitze Haltevorrichtungen, mittels denen eine Person relativ zum Sitz fixierbar ist. Es kann sich hierbei um Haltebügel handeln, alternativ oder zusätzlich kann die Haltevorrichtung Anschnallgurte aufweisen. Die Haltevorrichtung kann notwendig sein, um zu verhindern, dass Personen aus dem Sitz fallen und sich verletzen.

Gemäß einer bevorzugten Ausführungsform ist die Projektionsfläche gekrümmt und die Mehrzahl an Sitzen ist innerhalb einer gedachten Ausgleichskugel durch die Projektionsfläche angeordnet. Unter der Ausgleichskugel wird insbesondere die mathematisch definierte Ausgleichskugel verstanden, d.h. diejenige Kugel, für die das Integral über die Abweichungen zwischen der gedachten Kugel und der Projektionsfläche minimal wird.

Günstig ist es, wenn die Sitze automatisch relativ zu dem Bodenelement verschwenkbar sind. In anderen Worten ist insbesondere je zumindest ein Schwenkantrieb vorhanden, mittels dem die Sitze automatisch verschwenkbar sind. Das hat den Vorteil, dass Schwenkbewegungen des Bodenelements bei Bedarf ausgeglichen werden können. Es ist möglich, nicht aber notwendig, dass jeder Sitz seinen eigenen Schwenkantrieb besitzt. Es ist vielmehr auch möglich, dass zwei oder mehr Sitze von dem gleichen Schwenkantrieb angetrieben sind.

Gemäß einer bevorzugten Ausführungsform besitzt die Filmvorführvorrichtung eine Ansteuereinheit, die eingerichtet ist zum automatischen Durchführen eines Verfahrens mit den Schritten (i) Erfassen, ob für alle durch eine Person belegten Sitze ein Freigabesignal zum Bewegen der Bewegungsvorrichtung vorliegt, das den Zustand kodiert, dass die auf dem Sitz befindliche Person relativ zum Sitz fixiert ist, (ii) nach Vorliegen des Freigabesignals Schwenken des schwenkbaren Arms, so dass die Bewegungsvorrichtung in die Vorführ-Lage kommt, und (iii) Vorführen des Films und dazu synchronisiertes Bewegen der Sitze der Zuschauer, insbesondere durch Bewegen eines Bodenelements (30), auf dem die Sitze befestigt sind, mittels der Bewegungsvorrichtung.

Vorzugsweise ist die Ansteuereinheit eingerichtet zum automatischen Durchführen eines Verfahrens mit den zusätzlichen Schritten eines Schwenkens des schwenkbaren Arms, so dass die Bewegungsvorrichtung in die Andock-Lage kommt, und eines Lösens der Haltevorrichtungen.

Gemäß der Erfindung ist der am schwenkbaren Arm befestigte Linearantrieb mit dem schwenkbaren Arm in einer kinematischen Kette. Das heißt, dass sich stets der Linearantrieb bewegt, wenn sich der Arm bewegt. Die zumindest zwei Linearantriebe, die mit jeweils einem Fußpunkt ortsfest befestigt sind, sind hingegen von dem Arm unabhängig. Das heißt, dass eine Bewegung des Arms nicht zwangsläufig zu einer Bewegung der Linearantriebe führt und eine Bewegung des Linearantriebs nicht zwangsläufig zu einer Bewegung des Arms führt.

Alternativ kann der Arm auch so ausgebildet sein, dass die Fußpunkte von ein, zwei oder drei Linearantrieben am Arm befestigt sind, wobei die Fußpunkte der verbleibenden Linearantriebe nicht mittels des Arms bewegbar sind, sondern beispielsweise an einem Gebäude befestigt sind. In anderen Worten ist der Hexapodantrieb in Teilen mittels der Schwinge bewegbar.

Die Filmvorführvorrichtung besitzt vorzugsweise einen Zugang, auf dem Zuschauer zu dem Bodenelement gehen können, um zu den Sitzen zu gelangen. Das Bodenelement ist in der Andocklage an den Zugang angedockt.

Einer der Linearantriebe, der als erster Linearantrieb bezeichnet wird, ist in einem ersten Arm-Fußpunkt am schwenkbaren Arm befestigt und in einem ersten Bodenelement-Fußpunkt am Bodenelement befestigt. Vorzugsweise liegt der erste Bodenelement-Fußpunkt höher als die Fußpunkte von zumindest vier anderen Linearantrieben, wenn das Bodenelement in der Vorführ-Lage ist. Es ist auf diese Weise möglich, dass der erste Linearantrieb vergleichsweise geringe Kräfte aufnehmen muss und so leicht und wenig aufwändig ausgelegt werden kann.

Günstig ist es zudem, wenn die Bewegungsvorrichtung einen zweiten Linearantrieb aufweist, der mit einem zweiten Arm-Fußpunkt am schwenkbaren Arm befestigt ist und mit einem zweiten Bodenelement-Fußpunkt am Bodenelement befestigt ist, wobei der zweite Bodenelement-Fußpunkt höher liegt als die Fußpunkte von zumindest vier anderen Linearantrieben.

Besonders günstig ist es, wenn der erste Linearantrieb in der Vorführ-Lage unter einem ersten Winkel von betragsmäßig höchstens 30°, insbesondere höchstens 20°, und/oder mindestens 4° zur Horizontal-Ebene verläuft. Alternativ oder zusätzlich verläuft der zweite Linearantrieb in der Vorführ-Lage unter einem zweiten Winkel von betragsmäßig höchstens 30°, insbesondere höchstens 20°, und/oder mindestens 4° zur Horizontal-Ebene.

Der dritte Linearantrieb und der vierte Linearantrieb verlaufen in der Vorführ-Lage vorzugsweise unter einem dritten bzw. vierten Winkel, die vorzugsweise zwischen 10° nach unten und 20° nach oben gegen die Horizontale verlaufen.

Der fünfte Linearantrieb und der sechste Linearantrieb verlaufen in der Vorführ-Lage vorzugsweise unter einem fünften bzw. sechsten Winkel, die vorzugsweise zwischen 40° und 60° zur Horizontale verlaufen.

Günstig ist es, wenn ein als fünfter Linearantrieb bezeichneter Linearantrieb der Bewegungsvorrichtung in der Vorführ-Lage unter einem fünften Winkel von zumindest 40°, insbesondere zumindest 45°, zur Horizontal-Ebene verläuft.

Vorzugsweise sind die Linearantriebe in der Vorführ-Lage zwischen 50% ± 15 % des jeweiligen Hubs ausgefahren, wobei der Arm nach oben geschwenkt ist.

Alternativ oder zusätzlich ist es günstig, wenn die Bewegungsvorrichtung einen als sechsten Linearantrieb bezeichneten Linearantrieb aufweist, der in der Vorführ-Lage unter einem sechsten Winkel von zumindest 40°, insbesondere zumindest 45° zur Horizontal-Ebene verläuft. Die Winkel liegen in einem Intervall von minus 90° bis plus 90°. Wenn der fünfte Winkel die angegebene Größe hat, führt dies dazu, dass der fünfte Linearantrieb einen großen Anteil an der Gewichtskraft des Bodenelements sowie der Sitze und der Zuschauer aufnimmt. Je größer der fünfte Winkel ist, desto kleiner ist in der Regel die Kraft, die am fünften Linearantrieb anliegt. Das gleiche gilt für den sechsten Winkel und den sechsten Linearantrieb.

Besonders günstig ist es, wenn der fünfte und der sechste Linearantrieb spiegelsymmetrisch zueinander angeordnet sind. Im Rahmen der vorliegenden Beschreibung wird unter einer spiegelsymmetrischen Anordnung eine im technischen Sinne spiegelsymmetrische Anordnung verstanden. Das bedeutet, dass es möglich, nicht aber notwendig ist, dass die Antriebe im streng mathematischen Sinne spiegelsymmetrisch zueinander angeordnet sind. Es ist vielmehr ausreichend, dass die Linearantriebe funktional spiegelsymmetrisch angeordnet sind.

Vorzugsweise besitzt der schwenkbare Arm einen Schwenkantrieb. Dabei kann es sich um einen Drehantrieb handeln, insbesondere einen Elektromotor, der über ein Getriebe mit dem Arm verbunden ist. Alternativ handelt es sich um einen Linearantrieb, der auf den Schwenkarm wirkt.

Günstig ist es, wenn der schwenkbare Arm in der Vorführ-Lage arretierbar ist. Insbesondere existiert in diesem Fall eine Arretiervorrichtung. Unter der Arretiervorrichtung wird eine Vorrichtung verstanden, die eine Bewegung des schwenkbaren Arms unabhängig vom Antrieb verhindert. Wenn eine Arretiervorrichtung vorhanden ist, sind in der Regel die in den Antrieb eingeleiteten Kräfte kleiner, sodass der Antrieb schwächer ausgelegt werden kann, was vorteilhaft ist.

Alle Elemente, die sich beim Bewegen des Bodenelements aus der Andocklage in die Vorführ-Lage bewegen, haben einen gemeinsamen Massen-Schwerpunkt. Es existiert eine Schwerpunkt-Funktion, die einem vorgegebenen Schwenkwinkel des schwenkbaren Arms eine Höhe des Massen-Schwerpunkts zuordnet. Unter der Höhe wird die physikalische Höhe verstanden, das heißt, dass eine Zunahme der Höhe eine Erhöhung der potentiellen Energie bewirkt.

Günstig ist es, wenn die Schwerpunktfunktion ein lokales Maximum aufweist. Besonders günstig ist es, wenn lediglich ein lokales Maximum vorhanden ist. In diesem Fall ist das Bodenelement bistabil gelagert, wobei ein globales Minimum der potentiellen Energie der Elemente, die sich beim Bewegen des Bodenelements bewegen, in der Andock-Lage eingenommen wird, das andere Energie-Minimum wird in der VorführLage eingenommen. Das hat den Vorteil, dass bei der Bewegung aus der AndockLage in die Vorführ-Lage vergleichsweise wenig potentielle Energie freigesetzt wird. Das wiederum ermöglicht es im Falle eines Ausfalls des Antriebs, beispielsweise eines Stromausfalls, die Bewegungsvorrichtung mit vergleichsweise einfachen Mitteln aus der Vorführ-Lage in die Andock-Lage zurückzubringen.

Der Schwenkwinkel, bei dem die Schwerpunktfunktion das lokale Maximum hat, wird Maximalhöhen-Schwenkwinkel genannt. Der Schwenkwinkel, bei dem das Bodenelement in der Andock-Lage ist, wird Andock-Schwenkwinkel genannt. Der Schwenkwinkel, bei dem das Bodenelement in der Vorführ-Lage ist, wird Vorführ-Schwenkwinkel genannt. Günstig ist es, wenn der Maximalhöhen-Schwenkwinkel in dem Terzil zwischen dem Andock-Schwenkwinkel und dem Vorführ-Schwenkwinkel liegt, das den Vorführ-Schwenkwinkel beinhaltet.

Wenn das Bodenelement in der Vorführ-Lage ist, hat der Massen-Schwerpunkt eine Vorführ-Höhe. Ist das Bodenelement in der Andock-Lage, hat der Massen-Schwerpunkt eine Andock-Höhe. Günstig ist, wenn eine Einsink-Höhendifferenz zwischen der Höhe im lokalen Maximum und der Vorführ-Höhe höchstens doppelt so groß ist wie eine Zwischen-Höhendifferenz zwischen der Höhe im lokalen Maximum und der Andock-Höhe. Das macht es einfacher, das Bodenelement im Fall eines Stromausfalls aus der Vorführ-Lage in die Andock-Lage zurückzubringen.

Vorzugsweise besitzt die Filmvorführvorrichtung einen von Hand betätigbaren Notantrieb. Mittels des Notantriebs kann das Bodenelement vorzugsweise in die AndockLage, insbesondere aus der Vorführ-Lage in die Andock-Lage, gebracht werden. Der Notantrieb ist beispielsweise eine Kurbelvorrichtung.

Im Folgenden wird die Erfindung anhand der beigefügten Zeichnungen näher erläutert. Dabei zeigt
- Figur 1: in den Teilfiguren 1a, 1b und 1c eine Filmvorführvorrichtung, deren Bodenelement aus der Andock-Lage in die Vorführ-Lage gebracht wird,
- Figur 2a: eine perspektivische Ansicht der Bewegungsvorrichtung und des Bodenelements in der Andock-Lage und
- Figur 2b: die Bewegungsvorrichtung und das Bodenelement gemäß Figur 2a in der Vorführ-Lage.
- Figur 3: zeigt eine Schwerpunkt-Funktion.

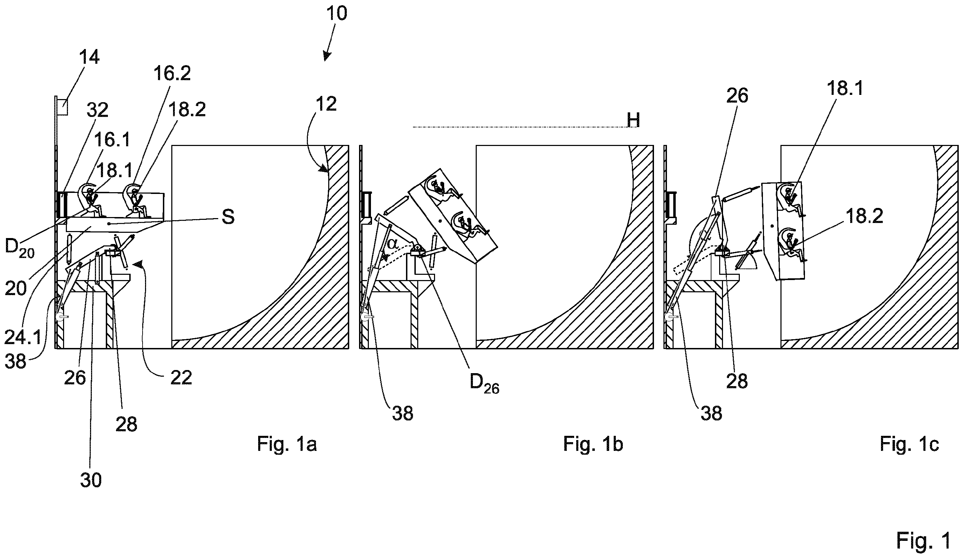

Figur 1a zeigt eine Filmvorführvorrichtung 10, die eine Projektionsfläche 12, einen Projektor 14, eine Mehrzahl an Sitzen 16.1, 16.2, ... für Zuschauer 18.1, 18.2, ..., ein Bodenelement 20 sowie eine Bewegungsvorrichtung 22 aufweist. Der Projektor 14 ist zum Projizieren eines Films auf die Projektionsfläche 12 angeordnet. Die Sitze 16.i (i = 1, 2, ...) sind am Bodenelement 20 um eine jeweilige Drehachse D₂₀ drehbar gelagert. Es ist möglich, dass eine Gruppe aus zumindest drei und vorzugsweise höchstens 20 Sitzen um die jeweils gleiche Drehachse D drehbar ist.

Die Bewegungsvorrichtung 22 umfasst sechs Linearantriebe 24.j, die gemeinsam einen Hexapodantrieb bilden. In anderen Worten ist es möglich, durch Betätigen der Linearantrieb 24.j das Bodenelement 20 in drei Translationfreiheitsgraden und drei Drehfreiheitsgraden zu bewegen.

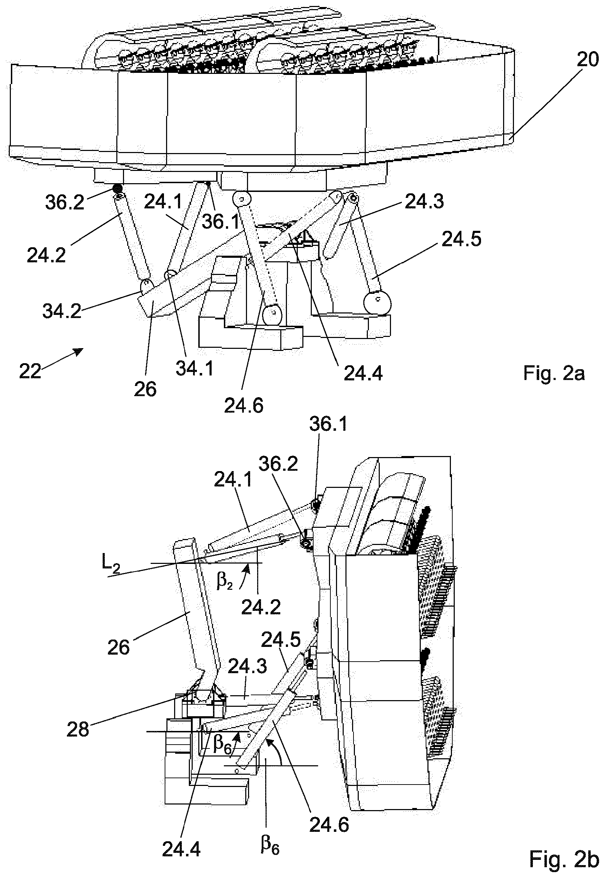

Die Bewegungsvorrichtung 22 weist einen schwenkbaren Arm 26 auf, an dem die Linearantriebe 24.1, 24.2 (vgl. Figur 2b) befestigt sind. Der Arm 26 ist in einem Drehlager 28 an einem Fundament 30 befestigt. Es sei darauf hingewiesen, dass der Begriff "Fundament" nicht bedeuten soll, dass ein direkter Kontakt zum Erdreich bestehen muss. Es ist beispielsweise auch möglich, dass das Fundament durch ein Gebäudeteil gebildet wird. Maßgeblich ist lediglich, dass das Fundament hinreichend stabil ist, um die Kräfte aufnehmen zu können, die beim Betrieb der Bewegungsvorrichtung 22 entstehen.

Figur 1a zeigt, dass die Filmvorführvorrichtung 10 einen Zugang 32 aufweisen kann, mittels dem die Zuschauer 18.i zu den Sitzen 16.i gelangen können. In Figur 1a ist das Bodenelement 20 in einer Andock-Lage gezeigt, in der es an den Zugang 32 angedockt ist. Es ist möglich, nicht aber notwendig, dass das Bodenelement 20 zum formschlüssigen Verbinden mit dem Zugang 32 ausgebildet ist. Besonders günstig ist es, wenn die Bewegungsvorrichtung 22 so ausgebildet ist, dass das Bodenelement 20 gegen den Zugang 32 drückt, auch wenn eine Energieversorgung ausgefallen ist.

Das ist beispielsweise dadurch erreichbar, dass ein Massen-Schwerpunkt S sich nach oben bewegt, wenn das Bodenelement 20 seine Andock-Lage verlässt. Zur Berechnung des Massen-Schwerpunkts werden all diejenigen Elemente verwendet, die sich beim Bewegung des Bodenelements 20 aus der Andock-Lage in eine Vorführ-Lage, die in Figur 1c gezeigt ist, bewegen und deren Bewegung zu einer Veränderung der potentiellen Energie beiträgt.

Figur 1c zeigt das Bodenelement 20 in seiner Vorführ-Lage, in der die Zuschauer 18.i einen vorgeführten Film ansehen können. Es ist zu erkennen, dass der Arm 26 um einen Schwenkwinkel α um eine Arm-Schwenkachse D₂₆ mittels des Drehlagers 28 verschwenkt wurde. Der Schwenkwinkel α wird als null angesehen, wenn das Bodenelement 20 in seiner in Figur 1c g gezeigten Andock-Lage ist. Der Schwenkwinkel *α* wird stets positiv gemessen.

Figur 1b zeigt das Bodenelement 20 auf einer Zwischenposition zwischen der Andock-Lage und der Vorführ-Lage.

Figur 2a zeigt die Bewegungsvorrichtung 22 und das Bodenelement 20 in der Andock-Lage. Es ist zu erkennen, dass der erste Linearantrieb 24.1 in einem ersten Arm-Fußpunkt 34.1 am Arm 26 befestigt ist und in einem ersten Bodenelement-Fußpunkt 36.1 am Bodenelement 20. Entsprechend besitzt jeder Linearantrieb 24.1, 24.2 einen Arm-Fußpunkt 34.1, 34.2 und ein Bodenelement-Fußpunkt 36.1, 36.2.

Figur 2b zeigt, dass der erste Bodenelement-Fußpunkt 36.1 und der zweite Bodenelemente-Fußpunkt 36.2 oberhalb aller anderen Bodenelement-Fußpunkte liegt, wenn das Bodenelement 20 in der Vorführ-Lage ist.

Jeder Linearantrieb hat eine Längsachse Lⱼ, entlang der er sich bei Bedienung verlängert oder verkürzt. Der Winkel zwischen dieser Längsachse Lj und einer horizontalen Ebene H wird mit βⱼ bezeichnet. Es ist zu erkennen, dass beispielsweise der zweite Winkel *β*2 kleiner ist als 20°, wenn das Bodenelement 20 in seiner Vorführ-Lage ist. Das gleich gilt für die Winkel *β*₁, *β*₃ und *β₄.* Hingegen ist ein sechster Winkel β₆, ebenso wie ein nicht eingezeichneter fünfter Winkel *β*₅, größer als 45°, im vorliegenden Fall nämlich *β*₆=55°.

Der Arm 26 wird im vorliegenden Fall durch einen schematisch eingezeichneten Schwenkantrieb 38 in Form eines Hydraulikzylinders angetrieben. Alternativ kann der Schwenkantrieb 38 beispielsweise auch einen Gewinde-Elektromotor aufweisen.

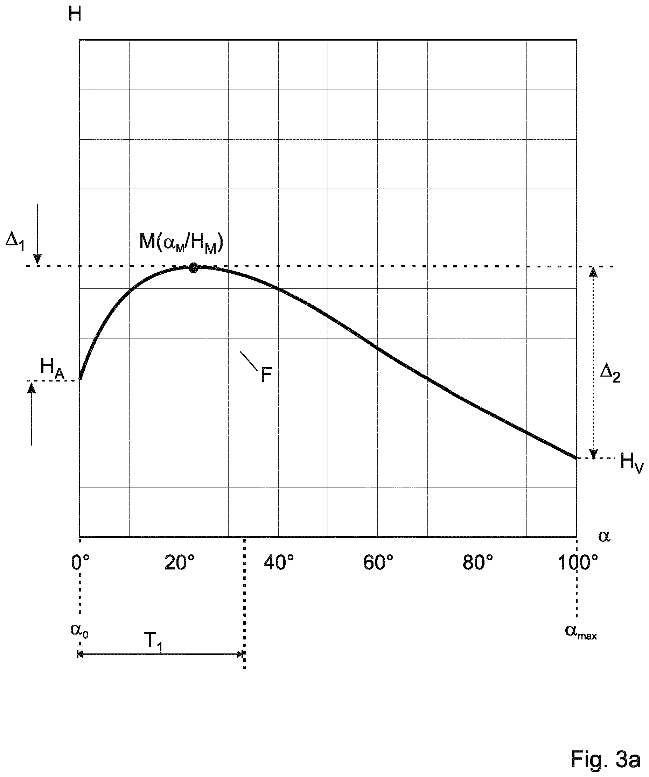

Figur 3a zeigt eine Schwerpunkt-Funktion F, die dem Schwenkwinkel α diejenige Höhe H zuordnet, die der Massen-Schwerpunkt S (vgl. Figur 1a) beim jeweiligen Schwenkwinkel *α* hat. Es ist zu erkennen, dass die ein lokales Maximum M (*α*_{M}/H_{M}) durchläuft. Der Maximalhöhen-Schwenkwinkel *α*_{M}, bei dem die Schwerpunkt-Funktion F das lokale Maximum durchläuft, liegt im andocklageseitigen Terzil T₁.

Es ist zu erkennen, dass die Schwerpunkt-Funktion F zwei globale Minima jeweils beim Schwenkwinkel *α*₀= 0° (Andock-Lage) und bei maximalem Schwenkwinkel amax (Vorführ-Lage) hat. Im vorliegenden Fall ist αₘₐₓ = 100°, dieser Wert kann aber auch größer oder kleiner sein.

Eine Einfahr-Höhendifferenz Δ₁ = H_{M} - H_{A} ist die Differenz zwischen der maximalen Höhe H_{M} und der Höhe H_{A} = H(α₀) in der Andock-Lage. Eine Einsink-Höhendifferenz Δ₂ = H_{M} - Hv ist die Differenz zwischen der maximalen Höhe H_{M} und der Vorführ-Höhe Hv = H(*α*ₘₐₓ) in der Vorführ-Lage. Die Andock-Höhe H_{A} ist im vorliegenden Fall größer als die Vorführ-Höhe Hv, was unabhängig von anderen Merkmalen der vorliegenden Ausführungsform eine bevorzugte Ausführungsform der Erfindung ist.

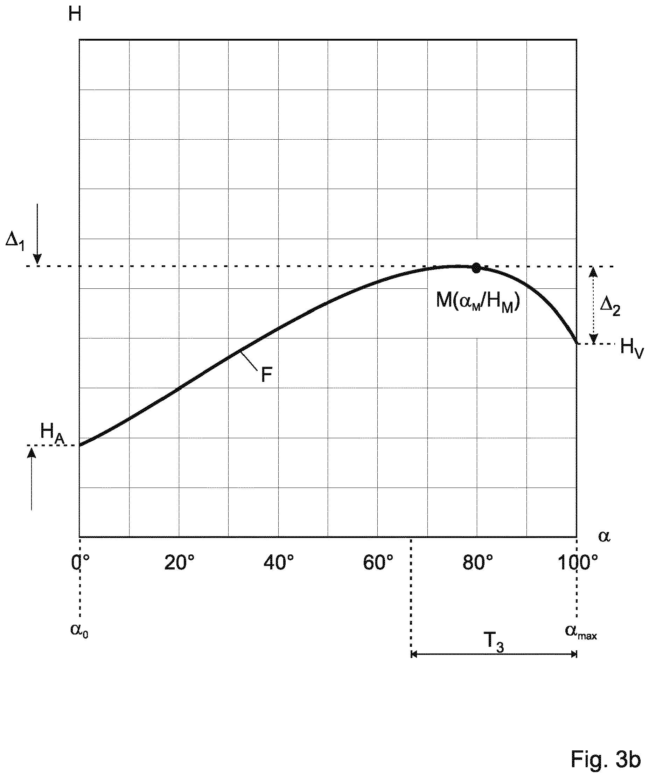

Figur 3b zeigt die Schwerpunkt-Funktion einer weiteren Ausführungsform der Erfindung, bei der das lokale Maximum im vorführlageseitigen Terzil T₃ liegt. Die Andock-Höhe H_{A} ist in diesem Fall kleiner als die Vorführ-Höhe Hv, was unabhängig von anderen Merkmalen der vorliegenden Ausführungsform eine alternativ bevorzugte Ausführungsform der Erfindung ist. Vorteilhaft an dieser Ausführungsform ist, dass das Bodenelement 20 besonders einfach in die Andock-Lage bringbar ist, wenn die Bewegungsvorrichtung ausfallen sollte. Das gilt insbesondere dann, wenn die Einfahr-Höhendifferenz Δ₁ - wie im vorliegenden Fall gezeigt - größer ist als die Einsink-Höhendifferenz Δ₂, allerdings ist das optional.

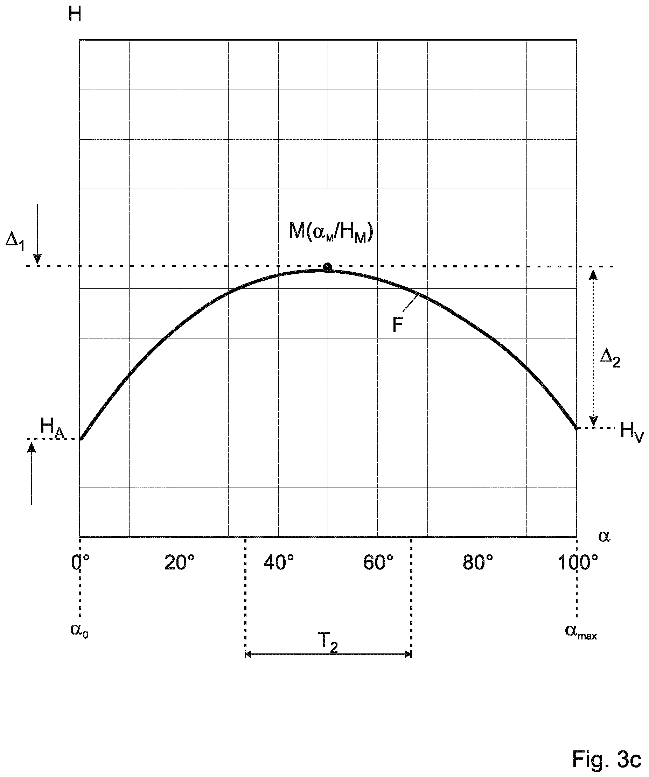

Figur 3c zeigt die Schwerpunkt-Funktion einer weiteren Ausführungsform der Erfindung, bei der das lokale Maximum im zentralen Terzil T₂ liegt. Die Einsink-Höhendifferenz Δ₂ unterscheidet sich um weniger als 15% von der Einfahr-Höhendifferenz Δ₁, was unabhängig von anderen Merkmalen der vorliegenden Ausführungsform eine alternativ bevorzugte Ausführungsform der Erfindung ist.

Figur 1a zeigt einen Notantrieb 40 in Form einer Kurbelvorrichtung, die ein Seil aufweist, das am freien Ende des Arms 26 befestigt ist. Das Seil ist auf einer Trommel aufgewickelt, die in Aufwickelvorrichtung per Feder vorgespannt ist, sodass das Seil stets gespannt ist. Ist im Falle eines Ausfalls der Bewegungsvorrichtung 22 der Schwenkwinkel α größer als αM (siehe Figur 3), kann durch Drehen der Trommel mit einer Handkurbel das Bodenelement 20 in seine Andock-Stellung zurückbewegt werden.

**Bezugszeichenliste:**

| | | | |
|---|---|---|---|
| 10 | Filmvorführvorrichtung | L | Längsachse |
| 12 | Projektionsfläche | M | lokales Maximum |
| 14 | Projektor | S | Massen-Schwerpunkt |
| 16 | Sitz | T₁ | andocklageseitiges Terzil |
| 18 | Zuschauer | T₂ | zentrales Terzil |
| | | T₃ | vorführlageseitiges Terzil |
| 20 | Bodenelement | | |
| 22 | Bewegungsvorrichtung | Δ₁ | Einfahr-Höhendifferenz |
| 24 | Linearantrieb | Δ₂ | Einsink-Höhendifferenz |
| 26 | Arm | | |
| 28 | Drehlager | | |
| 30 | Fundament | | |
| 32 | Zugang | | |
| 34 | Arm-Fußpunkt | | |
| 36 | Bodenelement-Fußpunkt | | |
| 38 | Schwenkantrieb | | |
| 40 | Notantrieb | | |
| α | Schwenkwinkel | | |
| βj | Winkel | | |
| Δ₁ | Einfahr-Höhendifferenz | | |
| Δ₂ | Einsink-Höhendifferenz | | |
| D₂₀ | Drehachse der Sitze | | |
| D₂₆ | Arm-Schwenkachse | | |
| F | Schwerpunkt-Funktion | | |
| H | Höhe | | |
| H_{A} | Andock-Höhe | | |
| Hv | Vorführ-Höhe | | |
| i | Zählindex | | |
| j | Zählindex der Antriebe | | |

## Patentansprüche

1. Zuschauermodul für eine Filmvorführvorrichtung (10) mit
(a) einer Mehrzahl an Sitzen (16.i) für Zuschauer (18),
(b) einem Bodenelement (20), an dem die Sitze (16.i) schwenkbar befestigt sind, und
(c) einer Bewegungsvorrichtung (22),
- die zumindest fünf Linearantriebe (24) aufweist, mittels denen Sitze (16) kollektiv in zumindest fünf Freiheitsgraden bewegbar sind,
- wobei zumindest ein Linearantrieb (24.1) an einem schwenkbaren Arm (26) befestigt und in einer kinematischen Kette mit dem schwenkbaren Arm (26) ist,
- wobei zumindest zwei Linearantriebe (24.5, 24.6) mit jeweils einem Fußpunkt (34) ortsfest befestigt sind und
- wobei der zumindest eine am schwenkbaren Arm (26) befestigte Linearantrieb (24), als erster Linearantrieb (24.1) bezeichnet, in einem ersten Arm-Fußpunkt (34.1) am schwenkbaren Arm (26) befestigt ist und in einem ersten Bodenelement-Fußpunkt (36.1) am Bodenelement (20) befestigt ist, und
(d) wobei das Bodenelement (20), durch Betätigen der Bewegungsvorrichtung (22)
aus einer ersten Andock-Lage, in der das Bodenelement (20) an einen Zugang andockbar ist,
in eine Vorführ-Lage, in der das Bodenelement (20) gegenüber seiner ersten Lage um einen Schwenkwinkel (α) von zumindest 15° verschwenkt ist, bringbar ist,
**dadurch gekennzeichnet, dass**
(e) die zumindest zwei Linearantriebe (24.5, 24.6), die mit jeweils einem Fußpunkt (34) ortsfest befestigt sind, mit jeweils dem anderen Fußpunkt am Bodenelement (20) befestigt sind und
(f) das Bodenelement (20) durch ein Schwenken des Arms (26) nach oben von der Andock-Lage in die Vorführ-Lage bringbar ist.

2. Filmvorführvorrichtung, **gekennzeichnet durch**
(a) ein Zuschauermodul nach Anspruch 1 und
(b) zumindest eine Filmdarstellvorrichtung.

3. Filmvorführvorrichtung nach Anspruch 2, **gekennzeichnet durch**
(a) eine Projektionsfläche (12) und zumindest einen Projektor (14), der zum Projizieren eines Films auf die Projektionsfläche eingerichtet ist, und/oder
(b) einen gekrümmten LED-Bildschirm.

4. Filmvorführvorrichtung nach Anspruch 2 oder 3, **gekennzeichnet durch**
(a) einen Zugang, auf dem Zuschauer zu den Sitzen gehen können,
(b) wobei das Bodenelement (20) in der Andock-Lage an den Zugang angedockt ist.

5. Filmvorführvorrichtung (10) nach einem der Ansprüche 2 bis 4, **dadurch gekennzeichnet, dass**,
wenn das Bodenelement (20) in der Vorführ-Lage ist, der erste Bodenelement-Fußpunkt (36.1) höher liegt als die Fußpunkte von zumindest vier anderen Linearantrieben.

6. Filmvorführvorrichtung (10) nach einem der Ansprüche 2 bis 5, **dadurch gekennzeichnet, dass**
(a) ein vom ersten Linearantrieb verschiedener zweiter Linearantrieb in einem zweiten Arm-Fußpunkt am schwenkbaren Arm befestigt ist und in einem zweiten Bodenelement-Fußpunkt (36) am Bodenelement (20) befestigt ist, und dass,
(b) wenn das Bodenelement (20) in der Vorführlage ist, der zweite Bodenelement-Fußpunkt (36) höher liegt als die Fußpunkte von zumindest vier anderen Linearantrieben.

7. Filmvorführvorrichtung (10) nach Anspruch 6, **dadurch gekennzeichnet, dass**
(a) der erste Linearantrieb (24.1) in der Vorführ-Lage unter einem ersten Winkel (βⱼ₁) von betragsmäßig höchstens 40°, insbesondere betragsmäßig höchstens 30°, zu einer Horizontal-Ebene verläuft und/oder
(b) der zweite Linearantrieb (24.2) in der Vorführ-Lage unter einem zweiten Winkel (β₂) von betragsmäßig höchstens 40°, insbesondere betragsmäßig höchstens 30°, zu einer Horizontal-Ebene verläuft.

8. Filmvorführvorrichtung (10) nach einem der Ansprüche 2 bis 7, **dadurch gekennzeichnet, dass**
(a) ein Linearantrieb, als dritter Linearantrieb bezeichnet, in der Vorführ-Lage unter einem dritten Winkel (β₃) von betragsmäßig höchstens 30°, insbesondere betragsmäßig höchstens 20°, zu einer Horizontal-Ebene verläuft und/oder
(b) ein Linearantrieb, als vierter Linearantrieb bezeichnet, in der Vorführ-Lage unter einem vierten Winkel (β₄) von betragsmäßig höchstens 30°, insbesondere betragsmäßig höchstens 20°, zu einer Horizontal-Ebene verläuft.

9. Filmvorführvorrichtung (10) nach einem der Ansprüche 2 bis 8, **dadurch gekennzeichnet, dass**
(a) ein Linearantrieb, als fünfter Linearantrieb (24.5) bezeichnet, in der Vorführ-Lage unter einem fünften Winkel (β₅) von zumindest 40°, insbesondere zumindest 45°, zur Horizontal-Ebene verläuft und/oder
(b) ein Linearantrieb, als sechster Linearantrieb (25.6) bezeichnet, in der Vorführ-Lage unter einem sechsten Winkel (β₆) von zumindest 40°, insbesondere zumindest 45°, zu einer Horizontal-Ebene verläuft.

10. Filmvorführvorrichtung (10) nach einem der Ansprüche 2 bis 9, **dadurch gekennzeichnet, dass** der schwenkbare Arm (26) einen Schwenkantrieb (38) aufweist und in der Vorführ-Lage arretierbar ist.

11. Filmvorführvorrichtung (10) nach einem der Ansprüche 2 bis 10, **dadurch gekennzeichnet, dass**
(a) alle Elemente, die sich beim Bewegen des Bodenelements (20) aus der Andock-Lage in die Vorführ-Lage bewegen, einen gemeinsamen Massen-Schwerpunkt haben (S), und dass
(b) eine Schwerpunktfunktion, die einem Schwenkwinkel des schwenkbaren Arms (26) eine Höhe (H) des Massen-Schwerpunkts (S) zuordnet, ein lokales Maximum (M) hat.

12. Filmvorführvorrichtung (10) nach Anspruch 11, **dadurch gekennzeichnet, dass** der Maximalhöhen-Schwenkwinkel, bei dem die Schwerpunktfunktion das lokale Maximum hat, in einem zentralen Terzil zwischen einem Andock-Schwenkwinkel, unter dem der schwenkbare Arm (26) verläuft, wenn das Bodenelement (20) in der Andock-Lage ist, und einem Vorführ-Schwenkwinkel, unter dem der schwenkbare Arm verläuft, wenn das Bodenelement (20) in der Vorführ-Lage ist, liegt.

13. Filmvorführvorrichtung (10) nach einem der Ansprüche 11 bis 12, **dadurch gekennzeichnet, dass**
eine Einsink-Höhendifferenz (Δ₂) zwischen
dem lokalen Maximum (M) und einer Vorführ-Höhe, die der Massen-Schwerpunkt (S) hat, wenn das Bodenelement (20) in der Vorführ-Lage ist,
höchstens doppelt so groß ist wie eine Einfahr-Höhendifferenz (Δ₁) zwischen dem lokalen Maximum (M) und einer Andock-Höhe, die der Massen-Schwerpunkt (S) hat, wenn das Bodenelement (20) in der Andock-Lage ist.

14. Filmvorführvorrichtung (10) nach einem der Ansprüche 2 bis 13, **gekennzeichnet durch** einen von Hand betätigbaren Notantrieb (40), insbesondere eine Rückholvorrichtung, zum Bringen des Bodenelements (20) in die Andock-Lage.

15. Verfahren zum Vorführen eines Films mittels einer Filmvorführvorrichtung, die
(a) zumindest eine Filmdarstellvorrichtung und
(b) ein Zuschauermodul nach Anspruch 1 aufweist,
mit den Schritten:
Betätigen der Bewegungsvorrichtung (22) unter Schwenken des Arms (26) nach oben, sodass das Bodenelement (20)
(i) aus einer ersten Andock-Lage, in der das Bodenelement (20) an den Zugang angedockt ist,
(ii) in eine Vorführ-Lage, in der das Bodenelement (20) gegenüber seiner ersten Lage um einen Schwenkwinkel (α) von zumindest 15° verschwenkt ist, gebracht wird.

## Claims

1. A viewer module for a motion picture presentation device (10) with
(a) a plurality of seats (16.i) for viewers (18),
(b) a base element (20) to which the seats (16.i) are attached such that they can be swivelled, and
(c) a movement device (22),
- that comprises at least five linear drives (24) by means of which seats (16) can be collectively moved in at least five degrees of freedom,
- wherein at least one linear drive (24.1) is attached to a swivelling arm (26) and is in a kinematic chain with the swivelling arm (26),
- wherein at least two linear drives (24.5, 24.6) are each immovably attached at a base point (34) and
- wherein the at least one linear drive (24) attached to the swivelling arm (26), referred to as the first linear drive (24.1), is attached to the swivelling arm (26) at a first arm base point (34.1) and to the base element (20) at a first base element base point (36.1), and
(d) wherein the base element (20), by activating the movement device (22) can be brought out of a first docking position, in which the base element (20) can be docked at an access point,
into a presentation position, in which the based element (20) is swivelled by a swivel angle (*α*) of at least 15° in relation to its first position,
**characterised in that**
(e) the at least two linear drives (24.5, 24.6), each of which is immovably attached at a base point (34), are attached at the respective other base point to the base element (20) and
(f) the base element (20) can be brought out of the docking position into the presentation position by swivelling the arm (26) upwards.

2. A motion picture presentation device, **characterised by**
(a) a viewer module according to claim 1 and
(b) at least one motion picture display device.

3. The motion picture presentation device according to claim 2, **characterised by**
(a) a projection surface (12) and at least one projector (14), which is configured to project a motion picture onto the projection surface, and/or
(b) a curved LED screen.

4. The motion picture presentation device according to claim 2 or 3, **characterised by**
(a) an access point by way of which viewers can reach the seats,
(b) wherein the base element (20) is docked at the access point when in the docking position.

5. The motion picture presentation device (10) according to one of the claims 2 to 4, **characterised in that**
when the base element (20) is in the presentation position, the first base element base point (36.1) is situated higher up than the base points of at least four other linear drives.

6. The motion picture presentation device (10) according to one of the claims 2 to 5, **characterised in that**
(a) a second linear drive, which is different to the first linear drive, is attached to the swivelling arm at a second arm base point and to the base element (20) at a second base element base (36),
(b) when the base element (20) is in the presentation position, the second base element base point (36) is situated higher up than the base points of at least four other linear drives.

7. The motion picture presentation device (10) according to claim 6, **characterised in that**
(a) the first linear drive (24.1) extends in the presentation position at a first angle (βⱼ₁) of absolute at most 40°, especially absolute at most 30°, to a horizontal plane and/or
(b) the second linear drive (24.2) extends in the presentation position at a second angle (β₂) of absolute at most 40°, especially absolute at most 30°, to a horizontal plane.

8. The motion picture presentation device (10) according to one of the claims 2 to 7, **characterised in that**
(a) a linear drive, referred to as a third linear drive, extends in the presentation position at a third angle (β₃) of absolute at most 30°, especially absolute at most 20°, to a horizontal plane and/or
(b) a linear drive, referred to as a fourth linear drive, extends in the presentation position at a fourth angle (β₄) of absolute at most 30°, especially absolute at most 20°, to a horizontal plane.

9. The motion picture presentation device (10) according to one of the claims 2 to 8, **characterised in that**
(a) a linear drive, referred to as a fifth linear drive (24.5), extends in the presentation position at a fifth angle (β₅) of absolute at most 40°, especially absolute at most 45°, to a horizontal plane and/or
(b) a linear drive, referred to as a sixth linear drive (25.6), extends in the presentation position at a sixth angle (β₆) of absolute at most 40°, especially absolute at most 45°, to a horizontal plane.

10. The motion picture presentation device (10) according to one of the claims 2 to 9, **characterised in that** the swivelling arm (26) comprises a swivel drive (38) and can be locked in the presentation position.

11. The motion picture presentation device (10) according to one of the claims 2 to 10, **characterised in that**
(a) all elements that move upon a movement of the base element (20) out of the locking position into the presentation position have a joint mass centre of gravity (S), and that
(b) a centre of gravity function, which assigns a height (H) of the mass centre of gravity to a swivel angle of the swivelling arm (26), has a local maximum (M).

12. The motion picture presentation device (10) according to claim 11, **characterised in that** the maximum height swivel angle, at which the centre of gravity function is at the local maximum, lies in a central tercile between a docking swivel angle, at which the swivelling arm (26) extends when the base element (20) is in the docking position, and a presentation swivel angle, at which the swivelling arm extends when the base element (20) is in the presentation position.

13. The motion picture presentation device (10) according to one of the claims 11 to 12, **characterised in that**
a sinking height difference (Δ₂) between the local maximum (M) and a presentation height of the mass centre of gravity (S) when the base element (20) is in the presentation position
is at most twice as large as an entry height difference (Δ₁) between the local maximum (M) and a docking height of the mass centre of gravity (S) when the base element (20) is in the docking position.

14. The motion picture presentation device (10) according to one of the claims 2 to 13, **characterised by** a manually activated emergency drive (40), in particular a return device for bringing the base element (20) into the docking position.

15. A method for presenting a motion picture by means of a motion picture presentation device which comprises
(a) at least one motion picture display device and
(b) a viewer module according to claim 1,
with the steps:
activating of the movement device (22) by swivelling the arm (26) upwards so that the base element (20)
(i) is brought out of a first docking position, in which the base element (20) is docked at the access point,
(ii) into a presentation position, in which the base element (20) is swivelled by a swivel angle (α) of at least 15° in relation to its first position.

## Revendications

1. Module spectateurs destiné à un dispositif de projection de film (10), comprenant
(a) une pluralité de sièges (16.i) pour les spectateurs (18),
(b) un élément formant sol (20) auquel les sièges (16.i) sont fixés de façon mobile en pivotement, et
(c) un dispositif de déplacement (22),
- qui présente au moins cinq entraînements linéaires (24) au moyen desquels les sièges (16) peuvent être déplacés collectivement dans au moins cinq degrés de liberté,
- au moins un entraînement linéaire (24.1) étant fixé à un bras pivotant (26) et se situant dans une chaîne cinématique avec le bras pivotant (26),
- au moins deux entraînements linéaires (24.5, 24.6) étant fixés de manière stationnaire par un point de base (34) respectif, et
- ledit au moins un entraînement linéaire (24) fixé au bras pivotant (26), appelé premier entraînement linéaire (24.1), étant fixé au bras pivotant (26) à un premier point de base de bras (34.1) et étant fixé à l'élément formant sol (20) à un premier point de base d'élément formant sol (36.1), et
(d) l'élément formant sol (20) pouvant être amené, par actionnement du dispositif de déplacement (22),
depuis une première position d'accostage dans laquelle l'élément formant sol (20) peut être accosté à un accès,
jusque dans une position de projection dans laquelle l'élément formant sol (20) est pivoté par rapport à sa première position d'un angle de pivotement (a) d'au moins 15°,
**caractérisé en ce que**
(e) lesdits au moins deux entraînements linéaires (24.5, 24.6) fixés de manière stationnaire par un point de base (34) respectif sont fixés à l'élément formant sol (20) par l'autre point de base respectif, et
(f) l'élément formant sol (20) peut être amené de la position d'accostage à la position de projection par un pivotement du bras (26) vers le haut.

2. Dispositif de projection de film, **caractérisé par**
(a) un module spectateurs selon la revendication 1 et
(b) au moins un dispositif de présentation de film.

3. Dispositif de projection de film selon la revendication 2, **caractérisé par** (a) une surface de projection (12) et au moins un projecteur (14) adapté pour projeter un film sur la surface de projection, et/ou (b) un écran LED incurvé.

4. Dispositif de projection de film selon la revendication 2 ou 3, **caractérisé par**
(a) un accès sur lequel les spectateurs peuvent aller jusqu'aux sièges,
(b) l'élément formant sol (20) étant accosté à l'accès dans la position d'accostage.

5. Dispositif de projection de film (10) selon l'une des revendications 2 à 4, **caractérisé en ce que**
lorsque l'élément formant sol (20) est dans la position de projection, le premier point de base d'élément formant sol (36.1) est plus haut que les points de base d'au moins quatre autres entraînements linéaires.

6. Dispositif de projection de film (10) selon l'une des revendications 2 à 5, **caractérisé en ce que**
(a) un deuxième entraînement linéaire, différent du premier entraînement linéaire, est fixé au bras pivotant à un deuxième point de base de bras (36) et est fixé à l'élément formant sol (20) à un deuxième point de base d'élément formant sol (36), et **en ce que**,
(b) lorsque l'élément formant sol (20) est dans la position de projection, le deuxième point de base d'élément formant sol (36) est plus haut que les points de base d'au moins quatre autres entraînements linéaires.

7. Dispositif de projection de film (10) selon la revendication 6, **caractérisé en ce que**
(a) dans la position de projection, le premier entraînement linéaire (24.1) s'étend selon un premier angle (βⱼ₁) d'une valeur absolue maximale de 40°, en particulier d'une valeur absolue maximale de 30°, par rapport à un plan horizontal, et/ou
(b) dans la position de projection, le deuxième entraînement linéaire (24.2) s'étend selon un deuxième angle (β₂) d'une valeur absolue maximale de 40°, en particulier d'une valeur absolue maximale de 30°, par rapport à un plan horizontal.

8. Dispositif de projection de film (10) selon l'une des revendications 2 à 7, **caractérisé en ce que**
(a) dans la position de projection, un entraînement linéaire, appelé troisième entraînement linéaire, s'étend selon un troisième angle (β₃) d'une valeur absolue maximale de 30°, en particulier d'une valeur absolue maximale de 20°, par rapport à un plan horizontal, et/ou
(b) dans la position de projection, un entraînement linéaire, appelé quatrième entraînement linéaire, s'étend selon un quatrième angle (β₄) d'une valeur absolue maximale de 30°, en particulier d'une valeur absolue maximale de 20°, par rapport à un plan horizontal.

9. Dispositif de projection de film (10) selon l'une des revendications 2 à 8, **caractérisé en ce que**
(a) dans la position de projection, un entraînement linéaire, appelé cinquième entraînement linéaire (24.5), s'étend selon un cinquième angle (β₅) d'au moins 40°, en particulier d'au moins 45°, par rapport au plan horizontal, et/ou
(b) dans la position de projection, un entraînement linéaire, appelé sixième entraînement linéaire (25.6), s'étend selon un sixième angle (β₆) d'au moins 40°, en particulier d'au moins 45°, par rapport à un plan horizontal.

10. Dispositif de projection de film (10) selon l'une des revendications 2 à 9, **caractérisé en ce que** le bras pivotant (26) comporte un entraînement de pivotement (38) et peut être bloqué dans la position de projection.

11. Dispositif de projection de film (10) selon l'une des revendications 2 à 10, **caractérisé en ce que**
(a) tous les éléments qui se déplacent de la position d'accostage à la position de projection lors du déplacement de l'élément formant sol (20) ont un barycentre commun (S), et **en ce que**
(b) une fonction barycentrique qui associe une hauteur (H) du barycentre (S) à un angle de pivotement du bras pivotant (26) présente un maximum local (M).

12. Dispositif de projection de film (10) selon la revendication 11, **caractérisé en ce que** l'angle de pivotement de hauteur maximale auquel la fonction barycentrique présente le maximum local se situe dans un tercile central entre un angle de pivotement d'accostage selon lequel le bras pivotant (26) s'étend lorsque l'élément formant sol (20) est dans la position d'accostage, et un angle de pivotement de projection selon lequel le bras pivotant s'étend lorsque l'élément formant sol (20) est dans la position de projection.

13. Dispositif de projection de film (10) selon l'une des revendications 11 à 12, **caractérisé en ce que**
une différence de hauteur d'enfoncement (Δ₂) entre le maximum local (M) et une hauteur de projection que le barycentre (S) présente lorsque l'élément formant sol (20) est dans la position de projection est au plus deux fois plus grande qu'une différence de hauteur d'introduction (Δ₁) entre le maximum local (M) et une hauteur d'accostage que le barycentre (S) présente lorsque l'élément formant sol (20) est dans la position d'accostage.

14. Dispositif de projection de film (10) selon l'une des revendications 2 à 13, **caractérisé par** un entraînement de secours (40) actionnable manuellement, en particulier un dispositif de rappel, pour amener l'élément formant sol (20) dans la position d'accostage.

15. Procédé de projection d'un film au moyen d'un dispositif de projection de film comprenant
(a) au moins un dispositif de présentation de film et
(b) un module spectateurs selon la revendication 1,
comprenant les étapes consistant à :
actionner le dispositif de déplacement (22) en faisant pivoter le bras (26) vers le haut, de sorte que l'élément formant sol (20) est amené
(i) depuis une première position d'accostage dans laquelle l'élément formant sol (20) est accosté à l'accès,
(ii) jusque dans une position de projection dans laquelle l'élément formant sol (20) est pivoté par rapport à sa première position d'un angle de pivotement (a) d'au moins 15°.
